# EUROPÄISCHE PATENTSCHRIFT

(11) **EP 2 479 471 B1**
(45) Veröffentlichungstag und Bekanntmachung des Hinweises auf die Patenterteilung: **20.07.2016**
(21) Anmeldenummer: 11194427.8
(22) Anmeldetag: 20.12.2011
(51) Int. Cl.: F01M 1/02, F01M 5/00, F16N 7/14, F16N 11/00, F16N 39/04

(54) **Schmierstoffpumpe und Schmiersystem mit Pumpenheizung**
Lubricant pump and lubricant system with pump heating
Pompe à lubrifiant et système lubrifiant doté d'un chauffage de pompe

(30) Priorität: 20.12.2010 DE 202010016721 U
(43) Veröffentlichungstag der Anmeldung: 25.07.2012
(73) Patentinhaber: SKF Lubrication Systems Germany GmbH, 69190 Walldorf (DE)
(72) Erfinder: Paluncic, Zdravko, 67067 Ludwigshafen (DE); Schönfeld, Andreas, 68789 St. Leon-Rot (DE); Cvetanovic, Milos, 68766 Hockenheim (DE)
(74) Vertreter: Keil & Schaafhausen Patent- und Rechtsanwälte PartGmbB

(56) Entgegenhaltungen:
- EP-A1- 0 595 097
- GB-A- 2 402 720
- US-A1- 2009 257 887
- US-B1- 6 244 387

## Beschreibung

Die vorliegende Erfindung betrifft eine Schmierstoffpumpe zum Fördern von Schmierstoff zu wenigstens einer Schmierstelle sowie ein Schmiersystem mit einer derartigen Schmierstoffpumpe. Die Schmierstoffpumpe weist bspw. einen Schmierstoffbehälter, eine Pumpeneinheit, einen dieser zugeordneten Antrieb, wenigstens einen Schmierstoffauslass sowie eine dem Antrieb zugeordnete Steuerungseinheit auf.

Bei bekannten Schmierstoffpumpen ist teilweise eine Funktionsüberwachung vorgesehen, die bspw. bei einem unzulässig hohen Druck am Schmierstoffauslass, der auf ein Blockieren der zu den Schmierstellen führenden Leitungen hindeutet, eine entsprechende Störungsmeldung an eine Überwachungseinrichtung abgibt. Weiter ist es auch bekannt, dass der Antrieb der Pumpeneinheit oder der Antrieb eines ggf. in dem Schmierstoffbehälter vorgesehenen Rührflügels bei zu hoher Belastung selbsttätig abschaltet und ggf. ebenfalls eine Störungsmeldung abgibt. Wenn eine solche Störungsmeldung in der Überwachungseinrichtung registriert wird, wird die Pumpe in der Regel vollständig gestoppt und muss durch einen Bediener nach Beseitigung der Störungsursache wieder aktiviert werden. Dies ist zeit- und arbeitsaufwändig.

Ein solcher Eingriff des Bedieners zum Aktivieren der Pumpe ist auch dann erforderlich, wenn keine Funktionsstörung der Pumpe vorliegt, sondern sich lediglich bei tiefen Temperaturen die Viskosität des Schmierstoffs derart erhöht hat, dass hierdurch die Funktion der Schmierstoffpumpe beeinträchtigt ist. Es ist daher bereits vorgeschlagen worden, eine Heizung vorzusehen, die Teile der Schmierstoffpumpe erwärmt. Derartige Heizungen werden in der Regel individuell zugeschaltet, ohne dass ein bedarfsgerechter Einsatz der Heizung erfolgt, wie dies beispielsweise aus EP 0 595 097 A1 (D2) bekannt ist. Auch ist bereits vorgeschlagen worden, die Steuerung der Heizung abhängig von Messwerten eines oder mehrerer Sensoren durchzuführen, wie es etwa aus GB 2 402 720 A oder US 2009/0257887 A1 bekannt ist.

Aufgabe der vorliegenden Erfindung ist es demgegenüber, eine Schmierstoffpumpe sowie ein Schmiersystem der oben genannten Art bereit zu stellen, welche sich insbesondere für den Einsatz in großer Kälte, bspw. in arktischen Umgebungen, eignen.

Diese Aufgabe wird erfindungsgemäß im Wesentlichen mit den Merkmalen des Anspruchs 1 gelöst. Der Erfindung liegt dabei der Gedanke zugrunde, dass die Schmierstoffpumpe zusätzlich wenigstens ein Heizelement aufweist, das über die Steuerungseinheit, die dem Antrieb zugeordnet ist, und/oder über eine separate Steuerungseinheit bedarfsgerecht betätigbar ist. Darüberhinaus ist erfindungsgemäß in dem Schmierstoffbehälter eine Rühreinrichtung, bspw. ein Rührflügel, vorgesehen. Dieser kann mittels des Antriebs der Pumpeneinheit und/oder mittels eines weiteren Antriebs betätigbar sein. Dem Antrieb der Rühreinrichtung ist eine Messeinrichtung zur Erfassung der Stromaufnahme des Antriebs zugeordnet, die mit der Steuerungseinheit und/oder einer weiteren Steuerungseinheit zur Betätigung des wenigstens einen Heizelements in Abhängigkeit der Stromaufnahme verbunden ist. Die Steuerungseinheit kann somit über die Messeinheit erfassen, ob der Antriebsmotor blockiert, da der Widerstand des Rührflügels in den Schmierstoffbehälter wegen Schmierstoffaushärtung bei tiefen Temperaturen zu hoch ist, Statt der Stromaufnahme des Antriebs kann die Messeinrichtung auch eine andere geeignete Größe zur Ermittlung des Zustands des Schmierstoffs in dem Schmierstoffbehälter erfassen, die dann durch die Steuereinheit ausgewertet wird. Eine solche Größe kann bspw. das zum Antrieb des Rührflügels erforderliche Drehmoment und/oder die Umdrehungszahl des Rührflügels sein.

Mit anderen Worten kann die Heizung nach der vorliegenden Erfindung zielgerichtet immer dann eingesetzt werden, wenn eine Störung der Schmierstoffpumpe auf Schmierstoffaushärtungen bei tiefen Temperaturen zurückzuführen ist. In derartigen Fällen ist es somit nicht mehr erforderlich, die Pumpe vollständig zu stoppen und einem Bediener die Störungsursache beseitigen zu lassen, sondern die Schmierstoffpumpe kann durch Betätigung des Heizelements selbsttätig wieder in Gang gesetzt werden.

Eine Schmierstoffaushärtung bei tiefen Temperaturen, die bspw. in arktischen Umgebungen oder bei strengem Winter herrschen, kann unterschiedliche Störungen innerhalb einer Schmierstoffpumpe verursachen. So ist es bspw. möglich, dass der Antriebsmotor blockiert, wenn der Widerstand für eine Rührflügelbewegung im Schmierstoffbehälter zu hoch wird. Weiter ist es möglich, dass in einer der Schmierstoffleitungen der Fließwiderstand den zulässigen Systemdruck übersteigt, so dass ein üblicherweise vorgesehenes Überdruckventil öffnet. Dadurch wird der Schmierstoff ins Freie statt zu den Schmierstellen gefördert. Eine weitere Störung kann auch darin liegen, dass das Pumpenelement den verhärteten Schmierstoff nicht aus dem Schmierstoffbehälter ansaugen kann. Nur in dem erstgenannten und dem letztgenannten Fall können die Störungen durch den Einsatz einer Heizung in der Schmierstoffpumpe beseitigt werden. Dagegen lässt sich ein zu hoher Fließwiderstand in einer der Schmierstoffleitungen nicht durch den Einsatz einer Heizung innerhalb der Schmierstoffpumpe beseitigen. Daher ist erfindungsgemäß vorgesehen, dass die Steuerungseinheit das Heizelement individuell und abhängig von der jeweiligen Störung betätigt.

Unabhängig von den zuvor beschriebenen Merkmalen ist es ein Grundgedanke der vorliegenden Erfindung, dass bei einer Schmierstoffpumpe der eingangs genannten Art die Steuerungseinrichtung derart ausgebildet und eingerichtet ist, dass die oben genannten Störzustände infolge von Schmierstoffaushärtung bei zu tiefen Temperaturen durch die Steuerungseinrichtung erkannt werden und entsprechende Gegenmaßnahmen durchgeführt werden.

In Weiterbildung dieses Erfindungsgedankens ist es vorgesehen, dass die Schmierstoffpumpe zusätzlich wenigstens einen Temperatursensor aufweist, der mit der Steuerungseinheit und/oder einer weiteren Steuerungseinheit zur Betätigung des wenigstens einen Heizelements in Abhängigkeit der durch den Temperatursensor ermittelten Temperatur verbunden ist. Mit Hilfe des Temperatursensors ist es möglich, dass die Steuerungseinheit erkennt, ob eine Störung auf eine Schmierstoffaushärtung infolge zu tiefer Temperatur zurückzuführen sein kann und dann individuell durch Zuschaltung des Heizelements diese Störung beseitigen kann.

Nach einer weiteren Ausführungsform der Erfindung ist in der Schmierstoffpumpe wenigstens ein Drucksensor vorgesehen, der vorzugsweise dem Schmierstoffauslass zugeordnet ist. Der Drucksensor ist bevorzugt mit der Steuerungseinheit bzw. einer weiteren Steuerungseinheit verbunden, um das wenigstens eine Heizelement in Abhängigkeit des durch den Drucksensor ermittelten Schmierstoffdrucks betätigen zu können. Wenn der Fließwiderstand in einer der Schmierstoffleitungen infolge zu geringer Temperaturen den zulässigen Systemdruck übersteigt, führt der Einsatz eines Heizelements in der Schmierstoffpumpe noch nicht zu einer Beseitigung der Störungsursache. Insofem kann ein unnötiger Einsatz des Heizelements abhängig von dem durch den Drucksensor ermittelten Schmierstoffdruck vermieden werden.

Es wird bevorzugt, wenn die Steuerungseinheit derart eingerichtet ist, dass diese durch Auswerten von Daten des Temperatursensors, der Messeinrichtung und/oder des Drucksensors einen Zustand erkennt, in welchem infolge zu niedriger Temperaturen der Antrieb für die Rühreinrichtung blockiert. Dabei wird es bevorzugt, wenn die Steuerungseinheit in diesem Zustand das wenigstens eine Heizelement einschaltet, um die Temperatur des Schmierstoffs in der Schmierstoffpumpe bzw. dem Schmierstoffbehälter zu erhöhen. Die Wärmemenge kann dabei durch die Erwärmungszeit, ggf. abhängig von der Umgebungstemperatur, geregelt werden. Es wird bevorzugt, wenn die Erwärmung vor einem Schmierzyklus beginnt, wobei zuerst die Umgebungstemperatur erfasst, und danach so viel Wärme zugeführt wird, dass es nicht zu einer Rührflügelblockade kommen kann.

Nach einer weiteren Ausführungsform der Erfindung ist die Steuerungseinheit derart eingerichtet, dass diese durch Auswerten von Daten des Temperatursensors, der Messeinrichtung und/oder des Drucksensors einen Zustand erkannt, in welchem infolge zu niedriger Temperaturen die Pumpeneinheit keinen Schmierstoff aus dem Schmierstoffbehälter ansaugen kann. Auch in diesem Zustand schaltet die Steuerungseinheit vorzugsweise das in der Schmierstoffpumpe vorgesehene Heizelement ein, um dem Pumpenhaushalt Wärme zuzuführen. Nach einer weiteren Ausführungsform der Erfindung ist es vorgesehen, dass die Steuerungseinheit derart eingerichtet ist, dass diese durch Auswerten von Daten des Temperatursensors, der Messeinrichtung und/oder des Drucksensors einen Zustand erkennt, in welchem infolge zu niedriger Temperaturen der Fließwiderstand in einer am Schmierstoffauslass angeschlossenen Leitung zu hoch ist. In diesem Fall wird es bevorzugt, wenn die Steuerungseinheit in diesem Zustand den Antrieb der Pumpeneinheit und/oder den Antrieb der Rühreinheit abschaltet, da durch Betätigung der Schmierstoffpumpe der Schmierstoff über das Überdruckventil ins Freie gefördert würde, statt zu der Schmierstelle zu gelangen. Diese Störung lässt sich durch eine Erwärmung des Pumpenhaushalts nicht beseitigen, da die Schmierstoffaushärtung in den Schmierleitungen außerhalb der Pumpe stattfindet. Es ist daher auch nicht notwendig eine Störmeldung auszugeben, sondern es wird vorzugsweise gewartet, bis sich die Umgebungstemperatur erhöht und die Widerstände in den Leitungen sinken.

Eine besonders kompakte und geschützte Bauweise der erfindungsgemäßen Schmierstoffpumpe kann dadurch erreicht werden, dass die Steuerungseinheit, der Temperatursensor, die Messeinrichtung, der Drucksensor, der wenigstens eine Antrieb und die Pumpeneinheit in einem gemeinsamen Gehäuse aufgenommen und/oder auf einem gemeinsamen Träger vorgesehen sind. Das Gehäuse kann zusätzlich eine gewisse Isolierfunktion haben, um die durch das Heizelement erzeugte Wärme innerhalb der von Schmierstoff durchflossenen Bereiche der Pumpe zu halten.

Die Erfindung betrifft weiter ein Schmiersystem mit einer Schmierstoffpumpe der oben genannten Art und einer mit dem Schmierstoffauslass der Schmierstoffpumpe und einem Verteiler verbundenen Leitung. Der Verteiler weist dabei vorzugsweise einen Funktionssensor auf, der mit der Steuerungseinheit der Schmierstoffpumpe und/oder einer weiteren Steuerungseinheit verbunden ist, um das wenigstens eine Heizelement der Schmierstoffpumpe in Abhängigkeit der Funktionsfähigkeit des Verteilers zu betätigen. Mit anderen Worten ist es möglich, bei einer Störung des Verteilers den energieaufwändigen Einsatz der Heizung zu unterlassen, selbst wenn es innerhalb der Schmierstoffpumpe zu einer Schmierstoffaushärtung infolge zu tiefer Temperaturen kommt.

Weiter kann auch dem Verteiler und/oder der Leitung wenigstens ein weiteres Heizelement zugeordnet sein, welches über die Steuerungseinheit und/oder eine weitere Steuerungseinheit betätigbar ist. Dies erfolgt vorzugsweise in Abhängigkeit der Daten des Funktionssensors, des Temperatursensors, der Messeinrichtung und/oder des Drucksensors. Auf dieser Weise lassen sich nicht nur temperaturbedingte Störungen innerhalb der Schmierstoffpumpe beseitigen, sondern auch Störungen infolge von Schmierstoffaushärtung bei tiefen Temperaturen, die innerhalb des Verteilers bzw. einer zu oder von dem Verteiler führenden Leitung hervorgerufen sind.

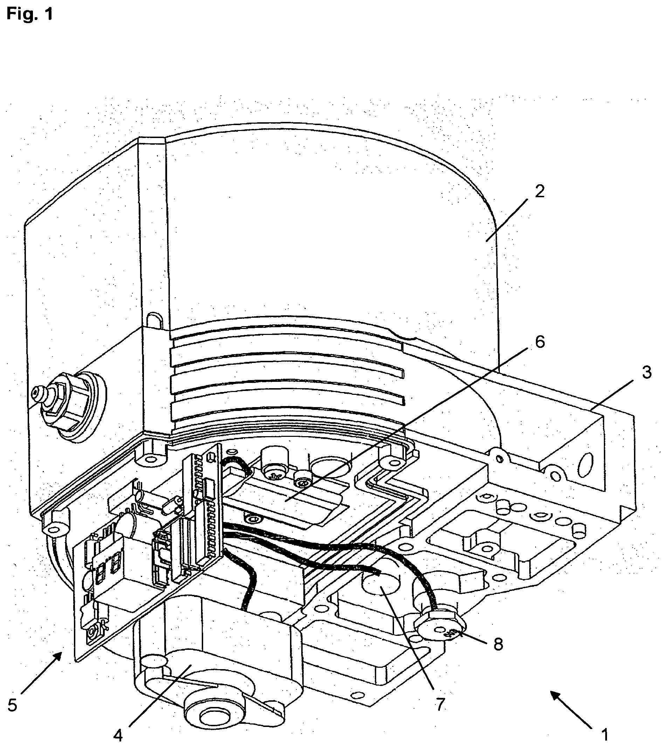

Die Erfindung wieder nachfolgend anhand eines Ausführungsbeispiels und unter Bezugnahme auf die Zeichnung näher erläutert. Dabei bilden alle beschriebenen und/oder bildlich dargestellten Merkmale für sich den Gegenstand der Erfindung unabhängig von ihrer Zusammenfassung in den Ansprüchen oder deren Rückbezügen. Die einzige Figur zeigt schematisch eine erfindungsgemäße Schmierstoffpumpe in Perspektivansicht. Aus Gründen der Übersichtlichkeit ist ein die Komponenten der Schmierstoffpumpe einschließend der Deckel eines Gehäuses nicht dargestellt, so dass die einzelnen Komponenten in der Figur sichtbar sind.

Die erfindungsgemäße Schmierstoffpumpe 1 weist einen Schmierstoffbehälter 2 auf, in welchem ein Schmierstoffvorrate vorhanden ist. In dem Schmierstoffbehälter 2 kann ein Rührflügel oder dgl. Rühreinrichtung vorgesehen sein, um den Schmierstoff, bspw. Schmierfett, zu durchmischen und fließfähig zu halten. Auf der in der Figur unteren Seite des Schmierstoffbehälters 2 ist ein Träger 3 vorgesehen, welcher mit einem Gehäusedeckel verschlossen werden kann, und auf welchem die Komponenten der Schmierstoffpumpe 1 angeordnet sind.

Die Schmierstoffpumpe weist zum Fördern von Schmierstoff aus dem Schmierstoffbehälter 1 zu einem Schmierstoffauslass eine Pumpeneinheit auf, die von einem Antriebsmotor 4 betätigbar ist. Der Antriebsmotor 4 kann auch die Rühreinrichtung in dem Schmierstoffbehälter 2 antreiben.

Weiter ist auf dem Träger 3 eine Steuerung 5 vorgesehen, welche den Antriebsmotor 4 bzw. die Pumpeneinheit und/oder die Rühreinheit individuell betätigen kann. In der dargestellten Ausführungsform ist auf der Unterseite des Schmierstoffbehälters 2 auf dem Träger 3 zusätzlich eine Heizpatrone 6 angeordnet, die ebenfalls durch die Steuerung 5 betätigbar ist. Die Heizpatrone 6 ist dabei derart in der Nähe der Pumpeneinheit vorgesehen, dass die Heizpatrone sowohl den in dem Schmierstoffbehälter 2 befindlichen Schmierstoff als auch die Pumpeneinheit erwärmen kann.

Die erfindungsgemäße Schmierstoffpumpe 1 ist zusätzlich mit einem Drucksensor 7 und einem Temperatursensor 8 ausgestattet, welche ebenfalls auf dem Träger 3 vorgesehen sind. Der Drucksensor 7 und der Temperatursensor 8 sind mit der Steuerung 5 verbunden, welche die von dem Drucksensor 7 und dem Temperatursensor 8 ermittelten Daten auswertet den Antriebsmotor 4 und/oder die Heizpatrone 6 in Abhängigkeit der Daten der Sensoren ansteuert. Der Temperatursensor 8 misst dabei die Umgebungstemperatur. Der Drucksensor 7 erfasst den Schmierstoffdruck am Schmierstoffauslass bzw. der an diesen anschließenden Leitung. Zusätzlich kann die Steuerung 5 auch über eine entsprechende Messeinrichtung bspw. die Stromaufnahme des Antriebsmotors 4 bzw. das Drehmoment zum Antrieb der Pumpeneinheit und/oder des Rührflügels ermitteln.

Auf diese Weise ist es möglich, dass die Steuerung 5 unterschiedliche infolge von Schmierstoffaushärtungen durch zu niedrige Temperaturen verursachte Störungszustände der Schmierstoffpumpe 1 erkennen kann. Durch Auswertung der Umgebungstemperatur und/oder der Stromaufnahme des Antriebsmotors 4 kann ermittelt werden, ob der Antriebsmotor wegen eines zu hohen Widerstands des Rührflügels in dem Schmierstoffbehälter 2 blockiert. Bei Motoren mit Motorschutz gegen Blockade wird üblicherweise die Stromversorgung unterbrochen. Bei Motoren ohne diesen Schutz kann die Stromaufnahme ausgewertet werden. Durch Auswertung der Umgebungstemperatur und der Daten des Drucksensors 7 lässt sich feststellen, ob der Fließwiderstand in den mit dem Schmierstoffauslass verbundenen Leitungen so groß ist, dass ein Überdruckventil öffnet und Schmierstoff ins Freie gelangt. Durch Auswertung der Umgebungstemperatur, der Stromaufnahme des Antriebsmotors 4 und den Daten des Drucksensors 7 kann festgestellt werden, ob die Pumpeneinheit Fett aus dem Schmierstoffbehälter 2 ansaugen kann. Ggf. können hierzu auch Daten eines Funktionssensors eines nicht dargestellten Verteilers ausgewertet werden, der als Bestandteil des Schmiersystems mit dem Schmierstoffauslass der Schmierstoffpumpe 1 verbunden ist.

### Bezugszeichenliste:

- 1: Schmierstoffpumpe
- 2: Schmierstoffbehälter
- 3: Träger
- 4: Antriebsmotor
- 5: Steuerung
- 6: Heizpatrone
- 7: Drucksensor
- 8: Temperatursensor

## Patentansprüche

1. Schmierstoffpumpe zum Fördern von Schmierstoff zu wenigstens einer Schmierstelle mit einem Schmierstoffbehälter (2), einer Pumpeneinheit, einem dieser zugeordneten Antrieb (4), wenigstens einem Schmierstoffauslass, einer dem Antrieb (4) zugeordneten Steuerungseinheit (5) und wenigstens einem Heizelement (6), das über die Steuerungseinheit (5) und/oder eine weitere Steuerungseinheit betätigbar ist, **dadurch gekennzeichnet, dass** in dem Schmierstoffbehälter (2) eine mittels des Antriebs (4) der Pumpeneinheit und/oder mittels eines weiteren Antriebs betätigbare Rühreinrichtung vorgesehen ist, wobei dem Antrieb (4) der Rühreinrichtung eine Messeinrichtung zur Erfassung der Stromaufnahme des Antriebs zugeordnet ist, die mit der Steuerungseinheit (5) und/oder der weiteren Steuerungseinheit zur Betätigung des wenigstens einen Heizelements (6) in Abhängigkeit der Stromaufnahme verbunden ist.

2. Schmierstoffpumpe nach Anspruch 1, **dadurch gekennzeichnet, dass** zusätzlich wenigstens ein Temperatursensor (8) vorgesehen ist, der mit der Steuerungseinheit (5) und/oder der weiteren Steuerungseinheit zur Betätigung des wenigstens einen Heizelements (6) in Abhängigkeit der durch den Temperatursensor (8) ermittelten Temperatur verbunden ist.

3. Schmierstoffpumpe nach Anspruch 1 oder 2, **dadurch gekennzeichnet, dass** zusätzlich wenigstens ein Drucksensor (7), insbesondere dem wenigstens einen Schmierstoffauslass zugeordnet, vorgesehen ist, der mit der Steuerungseinheit (5) und/oder der weiteren Steuerungseinheit zur Betätigung des wenigstens einen Heizelements (6) in Abhängigkeit des durch den Drucksensor (7) ermittelten Schmierstoffdrucks verbunden ist.

4. Schmierstoffpumpe nach den Ansprüchen 2 und 3, **dadurch gekennzeichnet, dass** die Steuerungseinheit (5) und/oder die weitere Steuerungseinheit derart eingerichtet sind, dass diese durch Auswerten von Daten des Temperatursensors (8), der Messeinrichtung und/oder des Drucksensors (7) einen Zustand erkennt, in welchem infolge zu niedriger Temperaturen der Antrieb für die Rühreinrichtung blockiert, und dass die Steuerungseinheit (5) und/oder die weitere Steuerungseinheit in diesem Zustand das wenigstens eine Heizelement (6) einschaltet.

5. Schmierstoffpumpe nach den Ansprüchen 2 und 3, **dadurch gekennzeichnet, dass** die Steuerungseinheit (5) und/oder die weitere Steuerungseinheit derart eingerichtet sind, dass diese durch Auswerten von Daten des Temperatursensors (8), der Messeinrichtung und/oder des Drucksensors (7) einen Zustand erkennt, in welchem infolge zu niedriger Temperaturen die Pumpeneinheit keinen Schmierstoff aus dem Schmierstoffbehälter (2) ansaugen kann, und dass die Steuerungseinheit (5) und/oder die weitere Steuerungseinheit in diesem Zustand das wenigstens eine Heizelement (6) einschaltet.

6. Schmierstoffpumpe nach den Ansprüchen 2 und 3, **dadurch gekennzeichnet, dass** die Steuerungseinheit (5) und/oder die weitere Steuerungseinheit derart eingerichtet sind, dass diese durch Auswerten von Daten des Temperatursensors (8), der Messeinrichtung und/oder des Drucksensors (7) einen Zustand erkennt, in welchem infolge zu niedriger Temperaturen der Fließwiderstand in einer am Schmierstoffauslass angeschlossenen Leitung zu hoch ist, und dass die Steuerungseinheit (5) und/oder die weitere Steuerungseinheit in diesem Zustand den Antrieb der Pumpeneinheit und/oder den Antrieb der Rühreinrichtung abschaltet.

7. Schmierstoffpumpe nach einem der vorhergehenden Ansprüche, **dadurch gekennzeichnet, dass** die Steuerungseinheit (5), der Temperatursensor (8), die Messeinrichtung, der Drucksensor (7), der wenigstens eine Antrieb (4) und die Pumpeneinheit in einem gemeinsamen Gehäuse aufgenommen und/oder auf einem gemeinsamen Träger (3) vorgesehen sind.

8. Schmiersystem mit einer Schmierstoffpumpe (1) nach einem der vorhergehenden Ansprüche und einer mit dem Schmierstoffauslass und einem Verteiler verbundenen Leitung, **dadurch gekennzeichnet, dass** der Verteiler einen Funktionssensor aufweist, der mit der Steuerungseinheit (5) und/oder der weiteren Steuerungseinheit zur Betätigung des wenigstens einen Heizelements (6) in Abhängigkeit der Funktionsfähigkeit des Verteilers verbunden ist.

9. Schmiersystem nach Anspruch 8, **dadurch gekennzeichnet, dass** dem Verteiler und/oder der Leitung ein weiteres Heizelement zugeordnet ist, das über die Steuerungseinheit (5) und/oder eine weitere Steuerungseinheit in Abhängigkeit der Daten des Funktionssensors, des Temperatursensors (8), der Messeinrichtung und/oder des Drucksensors (7) betätigbar ist.

## Claims

1. A lubricant pump for conveying lubricant to at least one lubricating point, with a lubricant container (2), a pump unit, a drive (4) assigned to this pump unit, at least one lubricant outlet, a control unit (5) assigned to the drive (4) and at least one heating element (6), which can be actuated by means of the control unit (5) and/or an additional control unit, **characterized in that** an agitator is provided in the lubricant container (2) and can be actuated by means of the drive (4) of the pump unit and/or by means of an additional drive, wherein a measuring device is assigned to the drive (4) of the agitator in order to measure the current consumption of the drive, and wherein said measuring device is connected to the control unit (5) and/or to the additional control unit in order to actuate the at least one heating element (6) in dependence on the current consumption.

2. The lubricant pump according to claim 1, **characterized in that** at least one temperature sensor (8) is additionally provided and connected to the control unit (5) and/or the additional control unit in order to actuate the at least one heating element (6) in dependence on the temperature measured by the temperature sensor (8).

3. The lubricant pump according to claim 1 or 2, **characterized in that** at least one pressure sensor (7) is additionally provided, particularly assigned to the at least one lubricant outlet, and connected to the control unit (5) and/or the additional control unit in order to actuate the at least one heating element (6) in dependence on the lubricant pressure measured by the pressure sensor (7).

4. The lubricant pump according to claims 2 and 3, **characterized in that** the control unit (5) and/or the additional control unit are designed in such a way that they detect a state, in which the drive for the agitator locks up due to excessively low temperatures, by evaluating data of the temperature sensor (8), the measuring device and/or the pressure sensor (7), and **in that** the control unit (5) and/or the additional control unit switches on the at least one heating element (6) in this state.

5. The lubricant pump according to claims 2 and 3, **characterized in that** the control unit (5) and/or the additional control unit are designed in such a way that they detect a state, in which the pump unit cannot take in any lubricant from the lubricant container (2) due to excessively low temperatures, by evaluating data of the temperature sensor (8), the measuring device and/or the pressure sensor (7), and **in that** the control unit (5) and/or the additional control unit switches on the at least one heating element (6) in this state.

6. The lubricant pump according to claims 2 and 3, **characterized in that** the control unit (5) and/or the additional control unit are designed in such a way that they detect a state, in which the flow resistance in a line connected to the lubricant outlet is excessively high due to excessively low temperatures, by evaluating data of the temperature sensor (8), the measuring device and/or the pressure sensor (7), and **in that** the control unit (5) and/or the additional control unit switches off the drive of the pump unit and/or the drive of the agitator in this state.

7. The lubricant pump according to one of the preceding claims, **characterized in that** the control unit (5), the temperature sensor (8), the measuring device, the pressure sensor (7), the at least one drive (4) and the pump unit are accommodated in a common housing and/or arranged on a common carrier (3).

8. A lubrication system with a lubricant pump (1) according to one of the preceding claims and a line, which is connected to the lubricant outlet and a distributor, **characterized in that** the distributor features a function sensor that is connected to the control unit (5) and/or the additional control unit in order to actuate the at least one heating element (6) in dependence on the operatability of the distributor.

9. The lubrication system according to claim 8, **characterized in that** an additional heating element is assigned to the distributor and/or the line and can be actuated by the control unit (5) and/or an additional control unit in dependence on the date of the function sensor, the temperature sensor (8), the measuring device and/or the pressure sensor (7).

## Revendications

1. Pompe à lubrifiant, destinée à transporter du lubrifiant vers au moins un point de graissage, avec un réservoir à lubrifiant (2), une unité de pompage, un entraînement (4) associé à cette dernière, au moins une sortie de lubrifiant, une unité de commande (5) associée à l'entraînement (4) et au moins un élément chauffant (6), qui peut être manoeuvré par l'intermédiaire de l'unité de commande (5) et/ou une unité de commande supplémentaire, **caractérisée en ce que** dans le réservoir à lubrifiant (2), il est prévu une unité de brassage qui peut être manoeuvrée au moyen de l'entraînement (4) de l'unité de pompage et/ou au moyen d'un entraînement supplémentaire, à l'entraînement (4) de l'unité de brassage étant associé un système de mesure destinée à détecter la consommation de courant de l'entraînement, qui est relié avec l'unité de commande (5) et/ou l'unité de commande supplémentaire pour manoeuvrer l'au moins un élément chauffant (6), en fonction de la consommation de courant.

2. Pompe à lubrifiant selon la revendication 1, **caractérisée en ce qu'**il est prévu en supplément au moins un capteur de température (8) qui est relié avec l'unité de commande (5) et/ou l'unité de commande supplémentaire pour la manoeuvre de l'au moins un élément chauffant (6) en fonction de la température déterminée par le capteur de température (8).

3. Pompe à lubrifiant selon la revendication 1 ou la revendication 2, **caractérisée en ce qu'**il est prévu en supplément au moins un capteur de pression (7), associé notamment à l'au moins une sortie de lubrifiant qui est relié avec l'unité de commande (5) et/ou avec l'unité de commande supplémentaire pour la manoeuvre de l'au moins un élément chauffant (6) en fonction de la pression de lubrifiant déterminée par le capteur de pression (7).

4. Pompe à lubrifiant selon les revendications 2 et 3, **caractérisée en ce que** l'unité de commande (5) et/ou l'unité de commande supplémentaires est installée de sorte que par évaluation de données du capteur de température (8), du système de mesure et/ou du capteur de pression (7), elle identifie un état dans lequel, suite à des températures trop basses, l'entraînement de l'unité de brassage bloque et **en ce que** dans cet état, l'unité de commande (5) et/ou l'unité de commande supplémentaire met en route l'au moins un élément chauffant (6).

5. Pompe à lubrifiant selon les revendications 2 et 3, **caractérisée en ce que** l'unité de commande (5) et/ou les unités de commande supplémentaires est installée de telle sorte que par évaluation de données du capteur de température (8), du système de mesure et/ou du capteur de pression (7), elle identifie un état dans lequel, suite à des températures trop basses, l'unité de pompage ne peut aspirer aucun lubrifiant hors du réservoir à lubrifiant (2) et **en ce que** dans cet état, l'unité de commande (5) et/ou l'unité de commande supplémentaire met en route l'au moins un élément chauffant (6)

6. Pompe à lubrifiant selon les revendications 2 et 3, **caractérisée en ce que** l'unité de commande (5) et/ou l'unité de commande supplémentaire est installée de sorte que par évaluation de données du capteur de température (8), du système de mesure et/ou du capteur de pression (7), elle identifie un état dans lequel suite à des températures trop basses, la résistance à l'écoulement est trop élevée dans un conduit raccordé sur la sortie de lubrifiant et **en ce que** dans cet état, l'unité de commande (5) et/ou l'unité de commande supplémentaire coupe l'entraînement de l'unité de pompage et/ou l'entraînement du système de brassage.

7. Pompe à lubrifiant selon l'une quelconque des revendications précédentes, **caractérisée en ce que** l'unité de commande (5), le capteur de température (8), les système de mesure, le capteur de pression (7), l'au moins un entraînement (4) et l'unité de pompage sont logés dans un carter commun et/ou sont prévus sur un support (3) commun.

8. Système de lubrification avec une pompe à lubrifiant (1) selon l'une quelconque des revendications précédentes et avec un conduit relié avec la sortie de lubrifiant et avec un distributeur, **caractérisé en ce que** le distributeur comporte un capteur de fonction qui est relié avec l'unité de commande (5) et/ou avec l'unité de commande supplémentaire pour la manoeuvre de l'au moins un élément chauffant (6), en fonction de l'aptitude au fonctionnement du distributeur.

9. Système de lubrification selon la revendication 8, **caractérisé en ce qu'**au distributeur et/ou au conduit est associé un élément chauffant supplémentaire qui est susceptible d'être manoeuvré par l'intermédiaire de l'unité de commande (5) et/ou de l'unité de commande supplémentaire en fonction de données du capteur de fonction, du capteur de température (8), du système de mesure et/ou du capteur de pression (7).
